# EUROPÄISCHE PATENTSCHRIFT

(11) **EP 1 305 347 B1**
(45) Veröffentlichungstag und Bekanntmachung des Hinweises auf die Patenterteilung: **14.09.2005**
(21) Anmeldenummer: 01971749.5
(22) Anmeldetag: 05.07.2001
(51) Int. Cl.: C08F 8/30, C08G 85/00, A61K 31/155

(54) **MODIFIZIERTER POLYMERER FORMKÖRPER, VERFAHREN ZU SEINER HERSTELLUNG UND SEINE VERWENDUNG**
MODIFIED POLYMERIC SHAPED BODY, METHOD FOR PRODUCING THE SAME AND USE THEREOF
CORPS MOULE POLYMERE MODIFIE, SON PROCEDE DE PRODUCTION ET SON UTILISATION

(30) Priorität: 25.07.2000 DE 10036082
(43) Veröffentlichungstag der Anmeldung: 02.05.2003
(73) Patentinhaber: Membrana GmbH, 42289 Wuppertal (DE)
(72) Erfinder: LEMKE, Horst, Dieter, 63785 Obernburg (DE); GEHLEN, Arne, 63867 Johannesberg (DE)
(74) Vertreter: Fett, Günter
(86) Internationale Anmeldenummer: PCT/EP2001/007666
(87) Internationale Veröffentlichungsnummer: WO 2002/008301

(56) Entgegenhaltungen:
- WO-A-94/19379
- GB-A- 1 020 059
- US-A- 3 950 539
- US-A- 4 159 898
- US-A- 5 128 360
- US-A- 5 994 577

## Beschreibung

Die Erfindung betrifft einen modifizierten polymeren. Formkörper, Verfahren zu seiner Herstellung und seine Verwendung.

Im Blut und im Blutplasma kommen insbesondere bei Nierenkranken und Diabetikern sog. AGE (Advanced Glycation Endproducts) vor. Diese sind Proteine, die durch Modifizierung und Vernetzung mit Abbauprodukten von Zuckern ihre Funktion verloren haben. Die AGE sind Ursache für verschiedene Folgeerkrankungen wie Ateriosklerose und Amyloidose. Daher ist vielfach versucht worden, die AGE aus dem Blut oder Plasma zu entfernen.

Durch übliche Blutbehandlungsverfahren wie High-Flux Dialyse, Low-Flux Dialyse oder Hämodiafiltration lässt sich die AGE-Konzentration nicht wesentlich senken.

Im Stand der Technik sind verschiedene Ansätze zur Entfernung von AGE vorgeschlagen worden.

Im international Joumal of Artficial Organs (1993), Band 16, Seiten 823-829 wird eine Adsorbersäule beschrieben, die mit hydrophobierten Cellulosekugeln gefüllt ist.

Damit wird zwar die Konzentration von β-2-Mikroglobulin und somit auch die Konzentration von AGE-modifiziertem β-2-Mikroglobulin verringert, jedoch werden gleichzeitig Proteine entfernt, die nicht entfernt werden sollen, wie z.B. RBP, Prolactin, C-PTH, HS-PTH und WBC.

Die US 5 891 341 beschreibt einen aus 17-18 Aminosäuren bestehenden durch Cystein geknüpften Ring, der auf einer Dialysemembran immobilisiert ist. Damit lassen sich zwar verschiedene AGE während einer Dialyse aus dem Blut entfernen. Jedoch werden nur die im Blut gelösten AGE entfernt. Bereits abgelagerte AGE werden durch diese Behandlung nicht erfasst. Außerdem ist die Handhabung einer solchen proteinmodifizierten Membran erheblich erschwert, da sie nicht sterilisiert werden kann. Zudem wird die AGE-Bildung als solche nicht unterbunden.

Die US 5 128 360 offenbart, dass Verbindungen mit aktivem Stickstoff, wie z.B. Aminoguanidin, α-Hydrazinohistidin und Lysin oder deren Gemische Mittel zur Inhibierung der AGE-Bildung darstellen. Gemäß US 5 128 360 scheinen diese Verbindungen mit frühen Glycosilierungsprodukten zu reagieren, wodurch diese an der AGE-Bildung gehindert werden. Die Verbindungen werden als Medikament verabreicht und kommen somit zwangsläufig mit dem Gewebe in Kontakt.

Die Zeitschrift Endocrinology and Metabolism (1996), Band 3, Seiten 149-166 offenbart, dass Aminoguanidin α-Oxyaldehyde wie z.B. Glyoxal, Methylglyoxal und 3-Deoxyglycoson, d.h. AGE-Precurser, abfängt und dadurch die AGE-Bildung verhindert. Jedoch führt Aminoguanidin im Kontakt mit dem Gewebe zu außerordentlich unerwünschten Nebenwirkungen in Gestalt der Unterdrückung der NO-Synthase.

Somit stellt sich die vorliegende Erfindung die Aufgabe, ein Erzeugnis und ein Verfahren zu seiner Herstellung zur Verfügung zu stellen, womit AGE-Precurser ohne unerwünschte Nebenwirkungen aus Blut oder Plasma entfernt werden können, und womit die Bildung von AGE unterdrückt werden kann.

Diese Aufgabe wird zum einen durch einen modifizierten polymeren Formkörper gelöst, der herstellbar ist durch Umsetzung von Diaminoguanidin und/oder Triaminoguanidin mit einem polymeren Ausgangsfonnkörper, welcher Reste R-X trägt, wobei R eine gegebenenfalls durch eine Hydroxylgruppe substituierte Alkylengruppe mit 1 bis 3 Kohlenstoffatomen und X eine Gruppe ist, die während der Umsetzung durch Diaminoguanidin und/oder Triaminoguanidin substituiert wird oder mit einem polymeren Ausgangsformkörper, welcher Reste Y trägt, an die während der Umsetzung Diaminoguanidin und/oder Triaminoguanidin addiert werden.

Im erfindungsgemäßen modifizierten polymeren Formkörper sind Diaminoguanidin und/oder Triaminoguanidin durch Substitutions- bzw. Additionsreaktionen kovalent an den polymeren Ausgangsformkörper gebunden, so dass der erfindungsgemäß modifizierte polymere Formkörper mit Diaminoguanidin- und/oder Triaminoguanidin-Liganden versehen ist. Durch die kovalente Bindung ist sichergestellt, dass sich beim Kontakt des erfindungsgemäßen modifizierten polymeren Formkörpers mit Blut oder Plasma keinerlei Diaminoguanidin und/oder Triaminoguanidin löst und in Kontakt mit dem Gewebe kommt, wenn das Blut oder das Plasma in den Körper des Patienten eingeleitet wird. Überraschenderweise zeigen die Diaminoguanidin- und die Triaminoguanidin-Liganden eine hohe Reaktivität mit AGE-Precursem, weshalb diese schnell aus Blut oder Plasma entfernt werden können, wodurch sich die Bildung der AGE merklich unterdrücken lässt.

Als Reste R-X, welche der erfindungsgemäße polymere Ausgangsformkörper trägt, sind grundsätzlich alle R-X geeignet, mit denen Diaminoguanidin oder Triaminoguanidin eine nucleophile Substitutionsreaktion eingehen können, wobei als Reste R-X die Halomethylgruppen -CH₂-Cl, -CH₂-Br, -CH2-I oder -CH₂-CH(OH)-CH₂-Cl bevorzugt werden, weil mit diesen Resten R-X die nucleophile Substitutionsreaktion schnell abläuft.

Als Reste Y, welche der erfindungsgemäße polymere Ausgangsformkörper trägt, sind grundsätzlich alle Reste Y geeignet, an die Diaminoguanidin oder Triaminoguanidin addiert werden können, wobei als Reste Y Epoxide der Formel 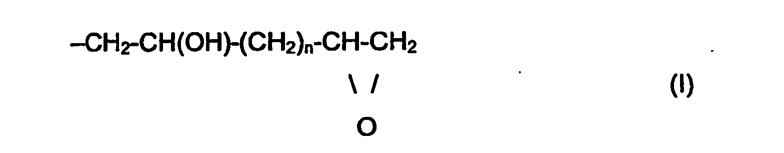 mit n = 1 bis 10 oder Epoxide der Formel 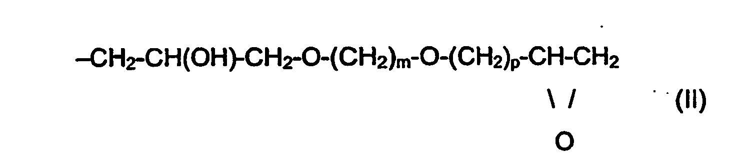 mit m = 1 bis 4 und p = 1 bis 3 bevorzugt werden, weil mit diesen Resten Y die Addition schnell abläuft.

In Kontakt mit AGE-Precurser haltigem Blut oder Plasma reagieren die Diaminoguanidin und/oder Triaminoguanidin-Liganden des modifizierten polymeren Formkörpers mit den AGE-Precursern unter Ausbildung chemischer Bindungen, sodass die AGE-Precurser irreversibel aus dem Blut oder Plasma entfernt werden. Beispielsweise reagieren die α,β-Dicarbonylgruppen der AGE-Precurser Glyoxal, Methylglyoxal und 3-Deoxyglycoson mit den Diaminoguanidin und/oder Triaminoguanidin-Liganden unter Ausbildung von 1,2,4-Triazinen. Die Reaktion ist wegen der hohen Reaktivität der in den Liganden vorhandenen Hydrazin-Gruppen sehr schnell und bei Raumtemperatur bereits nach etwa 10 bis 15 Minuten beendet.

Der erfindungsgemäße modifizierte polymere Formkörper ist z.B. ein partikuläres Material mit vorzugsweise poröser Struktur, womit eine Adsorbersäule gefüllt werden kann, durch die Blut oder Plasma geleitet wird. Über die Korngröße und die Porosität des partikulären Materials kann eine hohe Oberfläche für die Reaktion der AGE-Precurser mit den Diaminoguanidin- und/oder Triaminoguanidin-Liganden zur Verfügung gestellt werden.

In einer bevorzugten Ausführungsform der Erfindung ist der modifizierte polymere Formkörper eine semipermeable Polymermembran mit poröser Struktur, insbesondere eine Flach- oder Hohlfasermembran, wobei Polymermembranen besonders bevorzugt sind, die in Kontakt mit Plasma oder Blut hinreichend biokompatibel sind.

Der polymere Ausgangsformkörper, aus welcher der erfindungsgemäße modifizierte polymere Formkörper herstellbar ist, kann ein Biopolymer sein, z.B. Cellulose oder ein cellulosisches Polymer. Jedoch besteht der polymere Ausgangsformkörper vorzugsweise aus einem synthetischen Polymer, weil dessen chemisches Reaktionsverhalten leichter kontrollierbar ist als das Reaktionsverhalten beispielsweise von Cellulose.

Als synthetisches Polymer wird ein Polyamid besonders bevorzugt. Bestens geeignet sind Polyamid 4,6, Polyamid 6,6 oder Polyamid 6.

Ein besonders bevorzugter modifizierter polymerer Formkörper der vorliegenden Erfindung ist aus einem polymeren Ausgangsformkörper herstellbar, der aus einem Polyamid besteht, wobei an die Aminoendgruppen des Polyamids 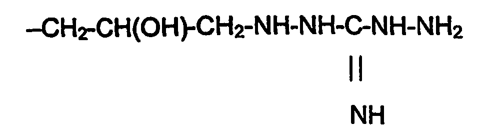 gebunden ist.

Des weiteren wird als polymerer Ausgangsformkörper ein Sulfongruppen enthaltendes Polymer bevorzugt, wie z.B. Polysulfon, Polyethersulfon oder Polyarylethersulfon. Besonders bevorzugt ist Polyethersulfon, d.h. ein Polymer mit der in der Formel (III) dargestellten Wiederholungseinheit.

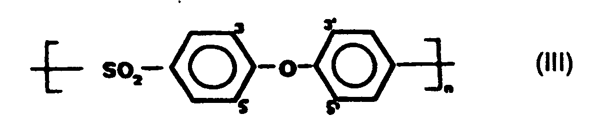

Derartige Polyethersulfone sind z.B. unter dem Markennamen Ultrason E® (BASF) kommerziell erhältlich. Ein solches handelsübliches Polyethersulfon ist z.B. Ultrason E 6020 P mit einem durch Lichtstreuung bestimmten mittleren Molekulargewicht M_{w} von etwa 58 000.

In einer besonders bevorzugten Ausführungsform der vorliegenden Erfindung besteht der erfindungsgemäße Formkörper aus einem Polyethersulfon, wobei an einer oder mehreren der Positionen 3, 3', 5 und 5' des Polyethersulfons 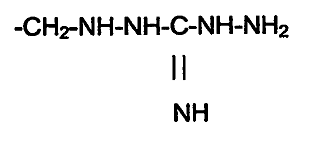 gebunden ist.

Die Aufgabe wird des Weiteren gelöst durch ein Verfahren zur Herstellung eines modifizierten polymeren Formkörpers umfassend die Schritte
a) Einführen von Resten R-X, wobei R eine gegebenenfalls durch eine Hydroxylgruppe substituierte Alkylengruppe mit 1 bis 3 Kohlenstoffatomen und X ein Halogenatom ist, in ein Polymer und Herstellen eines polymeren Ausgangsformkörpers aus dem die Reste R-X enthaltenden Polymer oder Einführen der Reste R-X mit der vorstehend genannten Bedeutung in einen polymeren Ausgangsformkörper oder Einführen eines Restes Y, an den Diaminoguanidin und/oder Triaminoguanidin addiert werden kann, in einen polymeren Ausgangsformkörper und
b) Umsetzen des die Reste R-X oder den Rest Y enthaltenden polymeren Ausgangsformkörpers mit Diaminoguanidin und/oder Triaminoguanidin, um so den modifizierten polymeren Formkörper zu erhalten.

Bevorzugt wird als Rest Y ein Epoxid der Formel 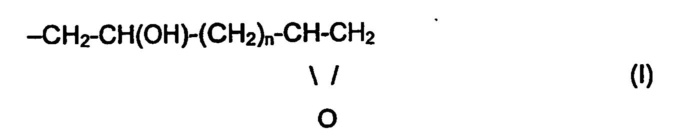 mit n = 1 bis 10 oder ein Epoxid der Formel 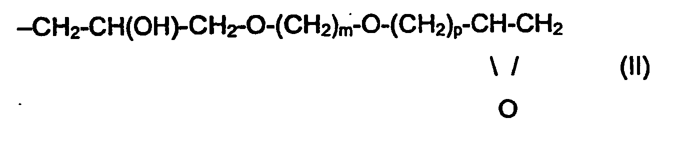 mit m = 1 bis 4 und p = 1 bis 3 eingeführt.

Die Umsetzung des polymeren Ausgangsformkörpers mit Diaminoguanidin und/oder Triaminoguanidin resultiert in einem modifizierten polymerer Formkörper, der an seiner Oberfläche Diaminoguanidin- und/oder Triaminoguanidin-Liganden trägt. Ist der polymere Ausgangsformkörper ein nichtporöses Material, dann ist nur die äußere Oberfläche mit Liganden versehen. Ist der polymere Ausgangsformkörper hingegen ein poröses Material, vorzugsweise ein mikroporöses Material, steht nicht nur die äußere Oberfläche sondern auch die durch die Poren gebildete innere Oberfläche zur Verfügung. Auf diese Weise entsteht eine hohe Dichte an Liganden, wodurch eine hohe Kapazität für die Bindung von AGE-Precursern bereitgestellt wird.

In einer bevorzugten Ausführungsform des erfindungsgemäßen Verfahrens wird als polymerer Ausgangsformkörper eine semipermeable Polymermembran mit poröser Struktur hergestellt bzw. eingesetzt.

Im Rahmen des erfindungsgemäßen Verfahrens ist als Polymer grundsätzlich jedes biokompatible Polymer geeignet, in das die Reste R-X eingeführt werden können. Als polymerer Ausgangsformkörper ist efindungsgemäß jeder biokompatible polymere Ausgangsformkörper geeignet, in den die Reste R-X oder Y eingeführt werden können. Z.B. kann das Polymer bzw. der polymere Ausgangsformkörper aus einem Biopolymeren, etwa aus Cellulose oder aus einem cellulosischen Polymer bestehen.

Jedoch wird vorzugsweise im erfindungsgemäßen Verfahren in Schritt a) als Polymer ein synthetisches Polymer bzw. als polymerer Ausgangsformkörper ein Ausgangsformkörper aus einem synthetischen Polymer eingesetzt, weil das chemische Reaktionsverhalten synthetischer Polymerer leichter kontrollierbar ist als das Reaktionsverhalten beispielsweise von Cellulose.

In einer besonders bevorzugten Ausführungsform des erfindungsgemäßen Verfahrens ist das synthetische Polymer Polyethersulfon, d.h. ein Polymer mit der in der Formel (II) dargestellten Wiederholungseinheit. Ein solches Polyethersulfon ist z.B. Ultrason E 6020 P (BASF) mit einem durch Lichtstreuung bestimmten mittleren Molekulargewicht M_{w} von etwa 58 000. Weitere bevorzugte synthetische Polymere sind andere, Sulfongruppen enthaltende Polymere, wie z.B. Polysulfon oder Polyarylethersulfon.

Insbesondere wird eine Ausführungsform des erfindungsgemäßen Verfahrens bevorzugt, bei der in Schritt a) Polyethersulfon chlor-, brom- oder iodmethyliert und daraus ein chlor-, brom- oder iodmethylierter Polyethersulfon-Ausgangsformkörper hergestellt wird, der in Schritt b) mit Diaminoguanidin umgesetzt wird. Ein besonders geeignetes Verfahren zur Chlor-, Brom- oder lodmethylierung von Polyethersulfon wird z.B. in der DE-A 10012 332 beschrieben.

Ganz besonders bevorzugt wird in Schritt a) das Polyethersulfon chlor-, brom-oder iodmethyliert und daraus eine chlor-, brom- oder iodmethylierte Polyethersulfon-Membran hergestellt, die in Schritt b) mit Diaminoguanidin umgesetzt wird.

In einer weiteren besonders bevorzugten Ausführungsform des erfindungsgemäßen Verfahrens ist das synthetische Polymer ein Polyamid. Bestens geeignet sind Polyamid 4,6, Polyamid 6,6 oder Polyamid 6.

Insbesondere wird eine Ausführungsform des erfindungsgemäßen Verfahrens bevorzugt, bei der in Schritt a) ein Ausgangsformkörper aus Polyamid eingesetzt und mit Epichlorhydrin umgesetzt wird und nachfolgend in Schritt b) mit Diaminoguanidin umgesetzt wird.

Ganz besonders bevorzugt wird in Schritt a) als Polyamid-Ausgangsformkörper eine Polyamid-Membran mit Epichlorhydrin und in Schritt b) mit Diaminoguanidin umgesetzt. Als Polyamid-Membran bestens geeignet ist eine Polyamid 6-Membran, wie sie unter der Typenbezeichnung "micro PA 386c" von Membrana GmbH erhältlich ist.

Für den Schritt b) des erfindungsgemäßen Verfahrens sind grundsätzlich alle Reaktionsbedingungen geeignet, unter denen die nucleophile aliphatische Substitution des Halogens X in R-X durch Diaminoguanidin oder Triaminoguanidin bzw. die Umsetzung des Restes Y mit Diaminoguanidin und/oder Triaminoguanidin möglich ist. Besonders bevorzugt ist eine Ausführungsform des erfindungsgemäßen Verfahrens, worin die Umsetzung in Schritt b) in einer wässrigen alkalischen Lösung stattfindet, weil unter diesen Bedingungen Diaminoguanidin und Triaminoguanidin die höchste Nucleophilie aufweisen.

Der Temperaturbereich für die Umsetzung in Schritt b) reicht von einer Temperatur oberhalb des Gefrierpunkts bis unterhalb des Siedepunkts der Aminoguanidin-und/oder Triaminoguanidin enthaltenden Lösung. In einer besonders bevorzugten Ausführungsform des erfindungsgemäßen Verfahrens findet die Umsetzung in Schritt b) in einem Temperaturbereich von Raumtemperatur bis etwa 80 °C statt. Z.B. wird, wenn eine Reaktionszeit von 1 h angestrebt ist, für die Umsetzung einer mit Epichlorhydrin umgesetzten Polyamidmembran mit Diaminoguanidin eine Temperatur von 80 °C benötigt, während für die Umsetzung einer Polyethersulfonmembran, die aus chlormethyliertem Polyethersulfon hergestellt wurde, Raumtemperatur genügt.

Die erfindungsgemäßen modifizierten Formkörper lassen sich vorteilhaft in Verfahren einsetzen, bei denen AGE-Precurser aus Blut oder Plasma entfernt werden. AGE-Precurser sind reaktive Carbonylverbindungen. Daher lassen sich die erfindungsgemäßen modifizierten Formkörper erfolgreich zur Entfernung von reaktiven Carbonylverbindungen aus Blut, Plasma oder aus PBS-Puffer (8 g/l NaCl, 2,9 g/l Na₂HPO₄·12H₂O und 0,2 g/l Na₂HPO₄, pH=7,4) verwenden.

Bevorzugt werden die erfindungsgemäßen modifizierten polymeren Formkörper zur Entfernung von Dicarbonylverbindungen, insbesondere von Glyoxal, Methylglyoxal, 3-Deoxyglycoson, Malondialdehyd, Glyceroldialdehyd und 2-Hydroxypropanal verwendet, die einzeln oder im Gemisch vorliegen.

Vorzugsweise wird der erfindungsgemäße modifizierte polymere Formkörper als modifizierte polymere Membran in einem geeigneten Gehäuse verwendet. Dabei ist die Membran z.B. eine Hämodialysemembran, so dass die AGE-Precurser während einer Hämodialyse chemisch an die Diaminoguanidin- oder Triaminoguanidin-Liganden gebunden und dadurch aus dem Blut entfernt werden. Des weiteren kann die modifizierte polymere Membran eine mikroporöse Membran sein, die in einem entsprechenden Modul angeordnet ist, wobei das zu behandelnde Blut oder Plasma im Dead-end Modus oder im Cross-flow Modus durch die Membran geleitet werden kann. Ein solcher Modul kann als eigenständige Einheit oder in Kombination mit z.B. einem Hemodialysator eingesetzt werden.

Die mit dem erfindungsgemäßen modifizierten Formkörper mögliche Abtrennung von AGE-Precursern aus Blut, Plasma oder PBS-Puffer beruht auf einer chemischen Reaktion der AGE-Precurser mit den Diaminoguanidin und/oder Triaminoguanidin-Liganden und ist somit unabhängig von der Größe der AGE-Precurser. Daher können mit dem erfindungsgemäßen modifizierten Formkörper große AGE-Precurser, die durch Dialyse nicht entfernbar sind, aus Plasma oder Blut entfernt werden.

Die Erfindung wird anhand der folgenden Beispiele näher erläutert.

### Beispiel 1: Modifizierte Polymermembran hergestellt aus einer Polyamid-Kapillarmembran, Epichlorhydrin und Diaminoguanidin

2 g einer Polyamid-Kapillarmembran ("micro PA 386 c", Membrana GmbH) werden in ein von unten anströmbares Rohr eingebracht. Zur Einführung der Chlor-Kohlenstoff Bindung in die Membran wird Epichlorhydrin als 5 Gew.-%ige Lösung in einem Lösungsmittel eingesetzt, das aus Wasser und Isopropanol in gleichen Gewichtsteilen besteht. Diaminoguanidin (DAG) wird als 5 Gew.-%ige wässrige Lösung eingesetzt, die eine zu DAG äquimolare Menge an NaOH enthält. Die Modifizierung der Polyamid-Kapillarmembran wird nach dem folgenden Agens/Zeit/Temperatur/Volumen - Schema durchgeführt. Nach jedem der in diesem Schema genannten Schritte wird das jeweilige Medium abgegossen.

| Agens | Zeit | Temperatur | Volumen |
|---|---|---|---|
| | [min] | [°C] | [ml] |
| H₂O/i-Propanol zum Benetzen der Membran | 10 | 50 | 200 |
| H₂O zum Waschen der Membran | 10 | 50 | 200 |
| H₂O zum Waschen der Membran | 10 | 100 | 200 |
| Epichlorhydrin/ H₂O/i-Propanol -Lösung zur Epoxidierung der Aminoendgruppen der Membran und Einführung der Cl-C Bindung | 60 | 50 | 200 |
| H₂O zum Waschen der Membran | 10 | 50 | 200 |
| DAG/NaOH/H₂O-Lösung zur Bindung von DAG an die Membran | 60 | 80 | 100 |
| H₂O zum Waschen der modifizierten Membran | 3 x (15 | 50 | 300) |

Die modifizierte Membran wird bis zur Gewichtskonstanz an der Luft getrocknet. Eine sterile Lagerung ist z.B. unter 70 %igem Ethanol möglich. Zum Nachweis, dass das DAG kovalent an die Membran gebunden ist, wird der Gehalt an -NH₂- Gruppen des Diaminoguanidins durch die Ninhydrinreaktion bestimmt.

### Beispiel 2: Modifizierte Polymermembran hergestellt aus einer chlormethylierten Polyethersulfon-Flachmembran und Diaminoguanidin

Polyethersulfon wurde, wie in der DE-A 100 12 332 beschrieben, mit einem Substitutionsgrad von 0,03 chlormethyliert. Dabei bedeutet der Substitutionsgrad den Quotienten aus der Gesamtzahl der Chlormethylgruppen im chlormethylierten Polyether sulfon und der Gesamtzahl der Wiederholungseinheiten des Polyethersulfons.

Eine Lösung aus 8 g des chlormethylierten Polyethersulfons, 36 g Dimethylacetamid und 9,6 g Polyethylenglykol (PEG 200) wird zu einem Film mit einer Naßfilmdicke von 75 µm gerakelt, an der Oberfläche mit Wasserdampf koaguliert, in Wasser gefällt, gewaschen und getrocknet. Die chlormethylierte Polyethersulfon-Flachmembran wird in eine Schale gelegt, die auf einem Schüttelbrett gelagert ist, und nach dem folgenden Agens/Zeit/Volumen - Schema mit Diaminoguanidin (DAG) bei Raumtemperatur umgesetzt. Das DAG wird als wässrige Lösung von 5 Gew.-%ige DAG und der äquimolaren Menge an NaOH eingesetzt. Nach jedem der im folgenden Schema genannten Schritte wird das jeweilige Medium abgegossen.

| Agens | Zeit | Volumen |
|---|---|---|
| | [min] | [ml] |
| H₂O/i-Propanol zum Benetzen der Membran | 10 | 100 |
| H₂O zum Waschen der Membran | 10 | 100 |
| DAG/NaOH/H₂O-Lösung zur Bindung von DAG an die Membran | 60 | 100 |
| H₂O zum Waschen der Membran | 3 x [10 | 200] |
| Mit HCl bis auf pH = 2 ansäuem | | |
| Mit H₂O Neutralwaschen der Membran | 3 x [10 | 200] |

Die Membran wird an Luft bis zur Gewichtskonstanz getrocknet.

### Beispiel 3: Hemmung der Pentosidin - Bildung in HD-Plasma mit einer DAG - modifizierten Polymermembran

Polyethersulfon wurde, wie in der DE-A 100 12 332 beschrieben, mit einem Substitutionsgrad von 0,17 chiormethyliert. Aus dem chlormethylierten Polyethersulfon wurde, wie in Beispiel 2 beschrieben, eine Flachmembran hergestellt und mit DAG umgesetzt.

Die im folgenden beschriebenen 12-tägigen Inkubationen bei 37 °C werden in Eppendorf-Kappen durchgeführt. Die modifizierte Membran wird mit HD-Plasma (Plasma von Hämodialysepatienten vor der Dialyse) inkubiert und danach die Konzentration des AGE's Pentosidin gemessen. Die Fläche der bei diesem Versuch eingesetzten modifizierten Membran wird so bemessen, dass pro ml HD-Plasma 5 µmol DAG vorhanden sind.

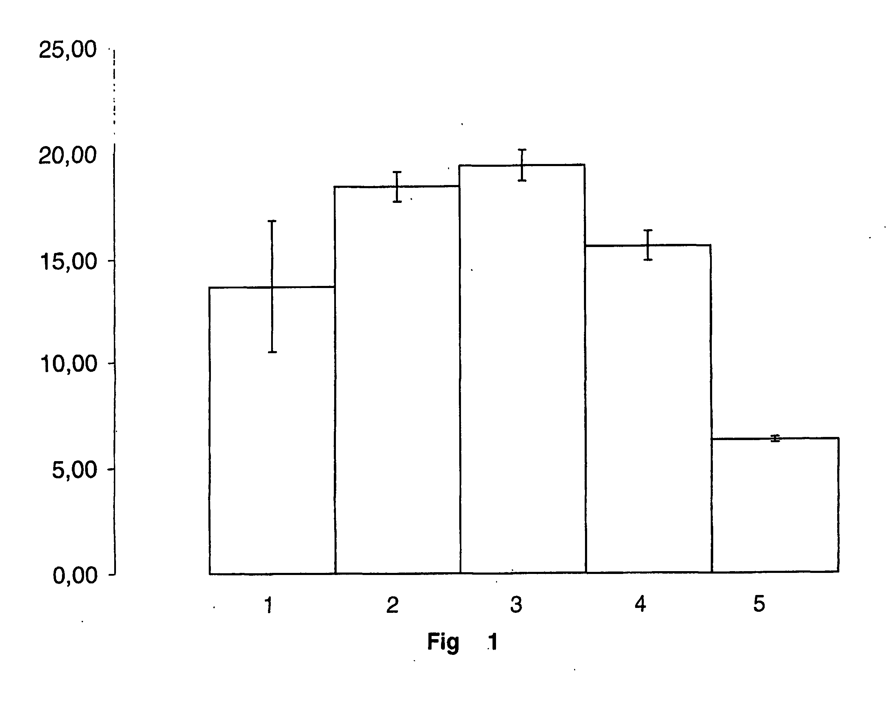

Die Pentosidin-Konzentrationen werden wie in Kidney International, Band 55 (1999), Seiten 2487-2492 beschrieben bestimmt. Die Ergebnisse sind im Balkendiagramm von Figur 1 dargestellt, wobei die Pentosidin-Konzentrationen in relativen Einheiten (rE) angegeben sind. Balken 5 von Figur 1 zeigt die Anfangskonzentration an Pentosidin im HD-Plasma, die ca. 6,3 rE beträgt. Balken 3 von Figur 1 zeigt die Pentosidin-Konzentration nach Inkubation des HD-Plasmas. Man erkennt, dass die im HD-Plasma vorhandenen AGE-Precurser zu einem Anstieg des AGE's Pentosidin auf ca. 19,3 rE führen, so dass während der Inkubation ca. 13 rE Pentosidin entstehen. Wie Balken 2 von Figur 1 zeigt, entsteht während der Inkubation der nicht modifizierten Polyethersulfonmembran etwa gleich viel Pentosidin. In Balken 1 von Figur 1 ist die Pentosidin-Konzentration dargestellt, die nach Inkubation mit der modifizierten Membran gemessen wird. Setzt man die ohne Membran entstandenen 13 rE Pentosidin gleich 100 %, bedeuten die bei Verwendung der modifizierten Membran entstandenen 7,4 rE Pentosidin, dass mit der modifizierten Mem-bran nur ca. 57 % des Pentosidins entstanden ist. Somit führte die modifizierte Mem-bran zu einer Unterdrückung der Pentosidin-Bildung um ca. 43 %. Balken 4 zeigt die Pentosidin-Konzentration nach Inkubation des HD-Plasmas mit 5 µmol Aminoguanidin pro ml HD-Plasma. In Anbetracht der eingezeichneten Fehlergrenzen resultiert etwa die gleiche Pentosidin-Konzentration wie mit der modifizierten Polymermem-bran, so dass bezogen auf die gleiche Zahl reaktiver Gruppen die kovalente Bindung des DAG's im Vergleich zum freien Aminoguanidin nicht zu einer verringerten Hemmung der Pentosidin-Bildung führt.

### Beispiel 4: Hemmung der Pentosidin - Bildung in dialysiertem HD-Plasma mit einer DAG - modifizierten Polymermembran

Beispiel 3 wurde wiederholt mit dem Unterschied, dass ein HD-Plasma verwendet wird, das 3 mal 8 h lang gegen Celluloseregenerat mit einer Ausschlussgrenze von 3500 Dalton dialysiert wurde.

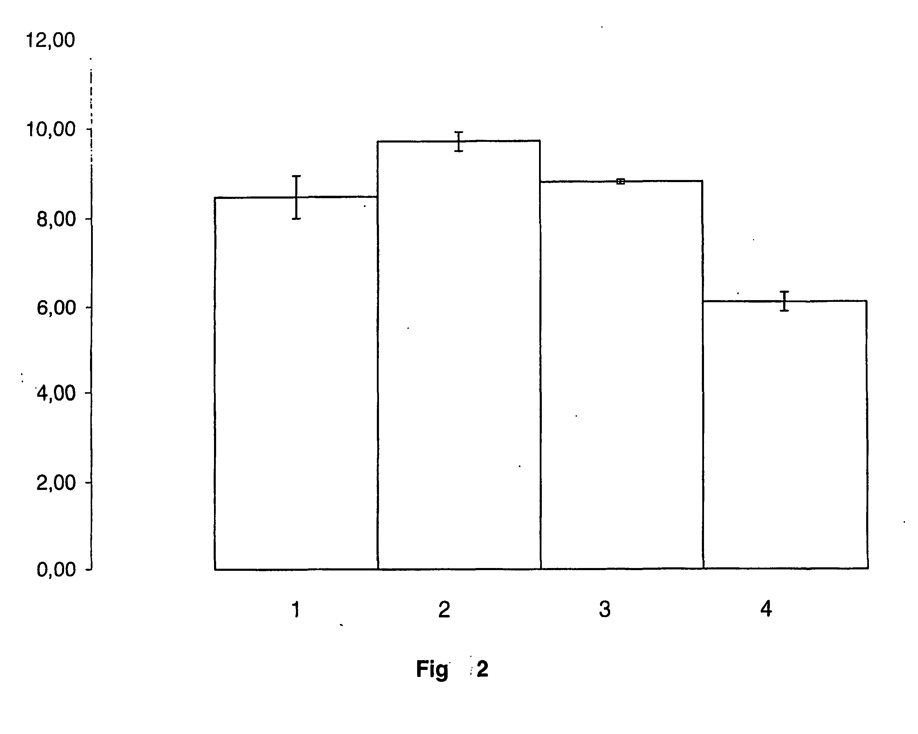

Die Ergebnisse sind im Balkendiagramm von Figur 2 dargestellt. Dessen Balken 4 zeigt die Anfangskonzentration an Pentosidin im HD-Plasma, die ca. 6 rE beträgt. Balken 2 von Figur 1 zeigt die Pentosidin-Konzentration nach Inkubation des HD-Plasmas ohne die modifizierte Membran. Man erkennt, dass die im HD-Plasma vorhandenen AGE-Precurser zu einem Anstieg des AGE's Pentosidin auf ca. 9,6 rE führen, so dass während der Inkubation ca. 3,6 rE Pentosidin entstehen. In Balken 1 von Figur 2 ist die Pentosidin-Konzentration dargestellt, die nach Inkubation mit der modifizierten Membran gemessen wird. Setzt man die ohne Membran entstandenen ca. 3,6 rE Pentosidin gleich 100 %, bedeuten die bei Verwendung der modifizierten Membran entstandenen ca. 2,4 rE Pentosidin, dass mit der modifizierten Membran nur ca. 66 % des Pentosidins entstanden ist. Somit führte die modifizierte Membran zu einer Unterdrückung der Pentosidin-Bildung um ca. 34 %. Balken 3 von Figur 2 zeigt die Pentosidin-Konzentration nach Inkubation des HD-Plasmas mit 5 µmol Aminoguanidin pro ml HD-Plasma. In Anbetracht der eingezeichneten Fehlergrenzen resultiert etwa die gleiche Pentosidin-Konzentration wie mit der modifizierten Polymermembran.

### Beispiel 5: Bindung von Methylglyoxal aus PBS-Puffer mit einer DAG - modifizierten Polymermembran

In Eppendorf-Kappen werden 1 ml PBS-Puffer, pH = 7,4, (Fa. Sigma), der u.a. den AGE-Precurser Methylglyoxal (MGO) in einer Konzentration von 1 mM enthält, mit einer chlomnethylierten und mit Diaminoguanidin (DAG) umgesetzten Polyethersulfon-Flachmembran gemäß Beispiel 3 kontaktiert. Die Fläche der modfizierten Membran wird so bemessen, dass 1 µmol NH₂-NH - Gruppen des DAG's in Kontakt mit dem MGO-haltigen PBS-Puffer stehen.

Nach 4 h auf einem Schüttelbrett bei Raumtemperatur wird die MGO-Konzentration im PBS-Puffer nach folgendem Verfahren bestimmt: 100 µl MGO-haltiger PBS-Puffer, 10 µl 2,3-Butandionlösung als interner Standard, 80 µl Perchlorsäure (2M) und 40 µl Ortho-Diaminophenylenlösung (1 %ig) werden vereint und 1 h in der Dunkelheit bei Raumtemperatur umgesetzt. Dabei reagiert die Dicarbonylverbindung MGO mit dem ortho-Diaminophenylen zum entsprechenden Chinoxalin-Derivat. Der PBS-Puffer enthält zusätzlich die AGE-Precurser Glyoxal und 3-Deoxyglycoson (je 1 mM), die mit ortho-Diaminophenylen zu den entsprechenden Chinoxalin-Derivaten umgesetzt werden.

Die entstandenen Chinoxalin-Derivate können durch HPLC aufgetrennt und mit einem UV-Detektor bei 315 nm detektiert werden. Der nach 19,7 Minuten erscheinende Peak ist dem MGO zuzuordnen. Als Säulenmaterial dient "Puresil" von Fa. Waters (C18, 120 Å, 4,6 x 250 mm). Die Säule wird mit einer Flussrate von 1 ml/min betrieben. Der die derivatisierten AGE-Precurser enthaltende PBS-Puffer wird eingespritzt. Anschließend wird mit den Lösungen A (0,1 % Trifluoressigsäure in Wasser) und B (0,08 % Trifluoressigsäure in 80%iger wässriger Acetoinitril-Lösung) das im folgenden beschriebene Konzentrations/Zeit-Programm gefahren.

| Zeit [min] | Konzentration von Lösung B (Differenz zu 100 % ist Lösung A) |
|---|---|
| 0 | 15 % |
| 0 - 25 | 15 - 28 %, linear ansteigend |
| 25-27 | 100 % |

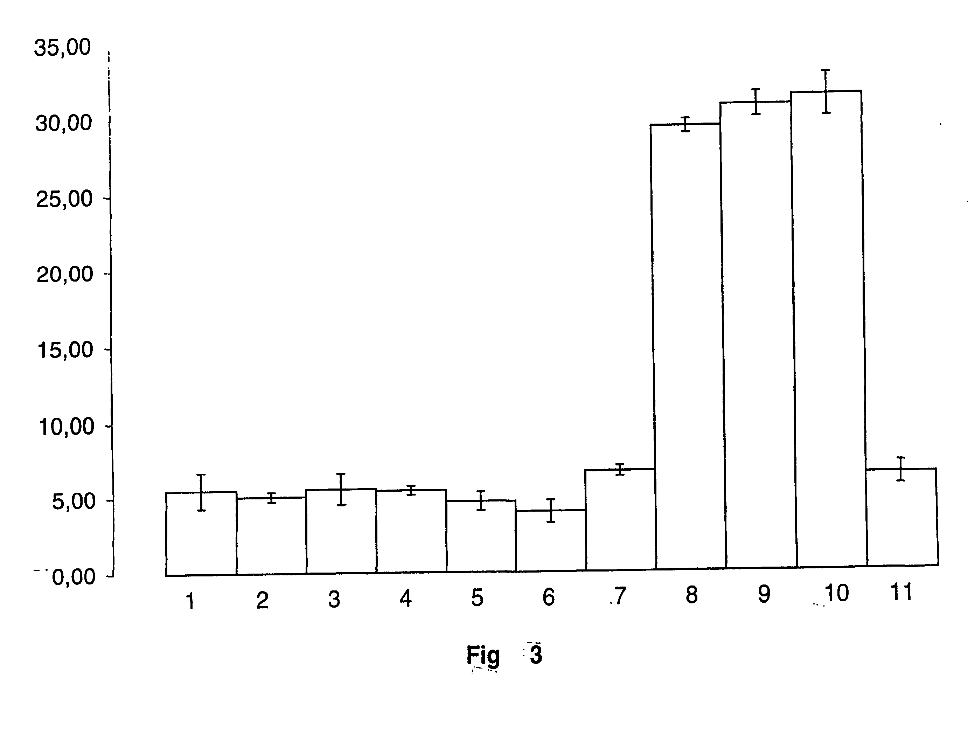

Die Ergebnisse sind in Figur 3 dargestellt, wobei die MGO-Konzentration in relativen Einheiten (rE) angegeben ist. Die Balken 1-7 von Figur 3 zeigen die MGO-Konzentrationen im PBS-Puffer, der die modifizierte Polymermembran enthielt. Die modifizierten Polymermembranen wurden nach ihrer Herstellung in die HCl-Form gebracht (Balken 1 und 2 von Figur 3), als freie Base eingesetzt (Balken 3 und 4 von Figur 3), in die HCl-Form gebracht und in Wasser gelagert (Balken 5 von Figur 3), in wässriger NaN₃-Lösung (Balken 6 von Figur 3) und als freie Base in Wasser gelagert (Balken 7 von Figur 3) und danach mit dem MGO-haltigen PBS-Puffer in Kontakt gebracht. Die Balken 1-7 von Figur 3 zeigen, dass nach der Kontaktzeit von 4 Stunden mit dem AGE-haltigen PBS-Puffer unabhängig von der Form, in der die modifizierte Polymermembran eingesetzt wurde, die MGO-Konzentration im PBS-Puffer mit ca. 5 rE nur etwa ein Sechstel der MGO-Konzentration beträgt, die in den PBS-Puffern gemessen wurden, in denen sich eine lediglich chlormethylierte Polyethersulfon-Membran (Balken 8 in Figur 3) und eine vor dem Versuch trocken gelagerte Polyethersulfon-Membran (Balken 9 in Figur 3) befand. Etwa gleich viel MGO wird im PBS-Puffer ohne Membran gefunden (Balken 10 von Figur 3), während PBS-Puffer, der 1 µmol Aminoguanidin-Hydrochlorid enthielt (Balken 11 von Figur 3) in etwa die MGO-Konzentration aufweist, die in den PBS-Puffern mit den modifizierten Polymermembranen gefunden werden.

### Beispiel 6: Bindung von AGE-Precursern aus HD-Plasma mit einer DAG - modifizierten Polymermembran

Beispiel 5 wurde wiederholt mit dem Unterschied, dass statt PBS-Puffer HD-Plasma eingesetzt wurde, das u.a. die AGE-Precurser Methylglyoxal (MGO), Glyoxal (GO) und eine reaktive Dicarbonylverbindung enthält, deren Chinoxalin-Derivat mit der in Beispiel 5 beschriebenen HPLC-Methode nach 14,3 Minuten detektiert wird. Die Fläche der modifizierten Membran wird so bemessen, dass 10 µmol NH₂-NH - Gruppen des DAG's in Kontakt mit dem HD-Plasma stehen.

Zur Bestimmung der AGE-Precurser müssen zuerst die Proteine aus dem HD-Plasma entfernt werden. Dazu werden 200 µl des HD-Plasmas in einer Eppendorfkappe mit 200 µl Wasser (reinst) verdünnt. Dann werden 100 µl 2M HCIO₄ zugemischt, wodurch die Proteine präzipitieren. Zum Niederschlagen des Präzipitats wird 3 min lang bei 12000 U/min und anschließend durch einen 0,45 µm Filter 3 min lang bei 5000 U/min zentrifugiert. Nach Zugabe von 5 µl 2,3-Butandion als interner Standard und 20 µl einer 1 %igen ortho-Phenylendiaminlösung wird 1 h lang bei Raumtemperatur reagiert, wodurch die AGE-Precurser in ihre Chinoxalin-Derivate überführt werden. Deren Auftrennung durch HPLC erfolgt wie in Beispiel 5 beschrieben.

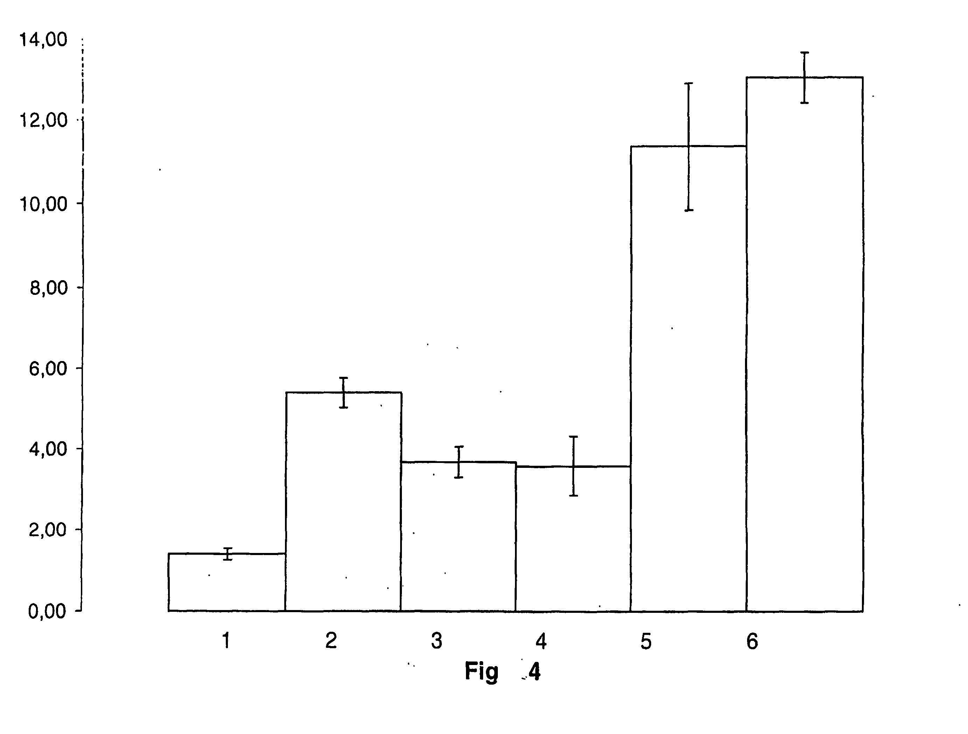

Die Ergebnisse für MGO sind in Figur 4 dargestellt. Balken 2 von Figur 4 zeigt die MGO-Konzentration in relativen Einheiten (rE), die nach 4 Stunden Kontaktzeit zwischen der modifizierten Polymermembran und dem HD-Plasma gemessen wurde. Im Vergleich zur MGO-Konzentration, die im HD-Plasma ohne Membran (Balken 6 von Figur 4) gemessen wurde, beträgt die MGO-Konzentration nach dem 4-stündigen Kontakt mit der modifizierten Polymermembran nur ca. 42 %. Die Balken 3, 4 und 5 von Figur 4 zeigen die MGO-Konzentrationen, die nach 4 Stunden Kontaktzeit mit HD-Plasma erhalten wurden, das 20, 5 und 1 µmol Aminoguanidin-Hydrochlorid pro ml HD-Plasma enthielt. Balken 1 von Figur 4 zeigt die MGO-Konzentration in HD-Plasma, das 3 mal 8 h lang gegen Celluloseregenerat mit einer Ausschlussgrenze von 3500 Dalton dialysiert wurde. Angesichts seiner Größe sollte MGO dadurch vollständig entfernbar sein, jedoch sind nach der Dialyse noch ca. 1,5 rE an MGO im HD-Plasma vorhanden.

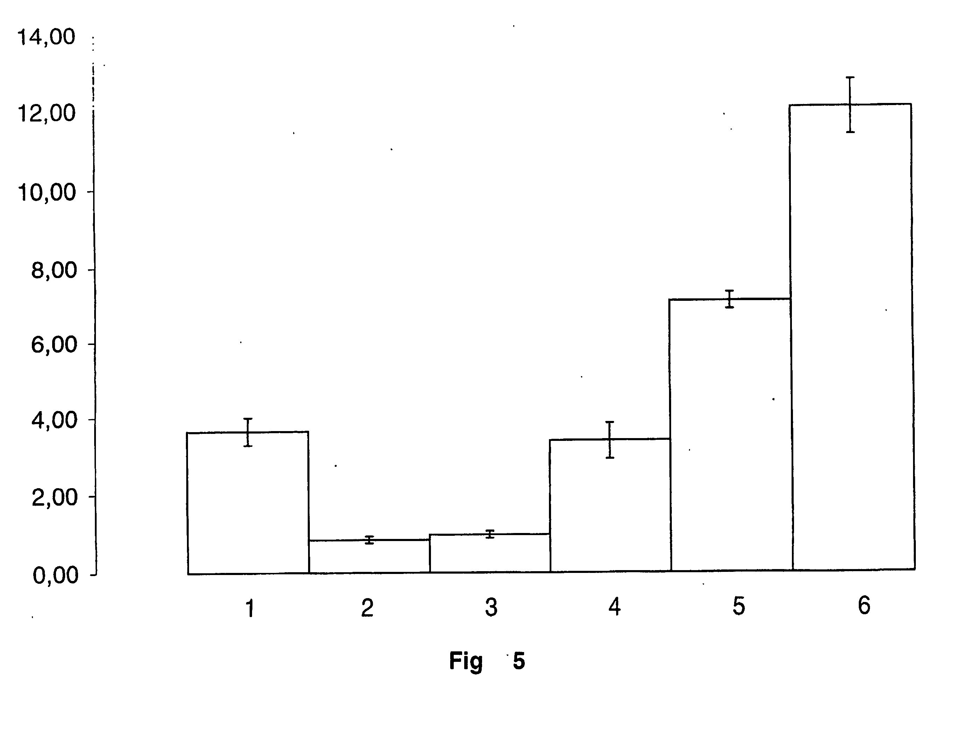

Die Ergebnisse für die in der HPLC nach 14,3 Minuten detektierte reaktive Dicarbonylverbindung sind in Figur 5 dargestellt. Balken 2 von Figur 5 zeigt die Konzentration des reaktiven Dicarbonyls in relativen Einheiten (rE), die nach 4 Stunden Kontaktzeit zwischen der modifizierten Polymermembran und dem HD-Plasma gemessen wurde. Im Vergleich zur Konzentrationen des reaktiven Dicarbonyls, die im HD-Plasma ohne die modifizierte Polymermembran gemessen wurde (Balken 6 von Figur 5), beträgt die Konzentration des reaktiven Dicarbonyls nur ca. 7 %. Die Balken 3, 4 und 5 von Figur 5 zeigen die Restkonzentrationen des reaktiven Dicarbonyls in HD-Plasma, die nach 4 Stunden Kontaktzeit mit einem HD-Plasma erhalten wurden, dem 20, 5 und 1 µmol Aminoguanidin-Hydrochlorid pro ml HD-Plasma zugesetzt worden waren. Balken 1 von Figur 5 zeigt die Konzentration des reaktiven Dicarbonyls, das zuvor 3 mal 8 h gegen Celluloseregenerat mit einer Ausschlussgrenze von 3500 Dalton dialysiert wurde. Der Vergleich von Balken 1 mit Balken 2 von Figur 5 zeigt, dass durch die modifizierte Polymermembran das im HD-Plasma vorkommende reaktive Dicarbonyl wesentlich effizienter entfernt wird als durch die Dialyse.

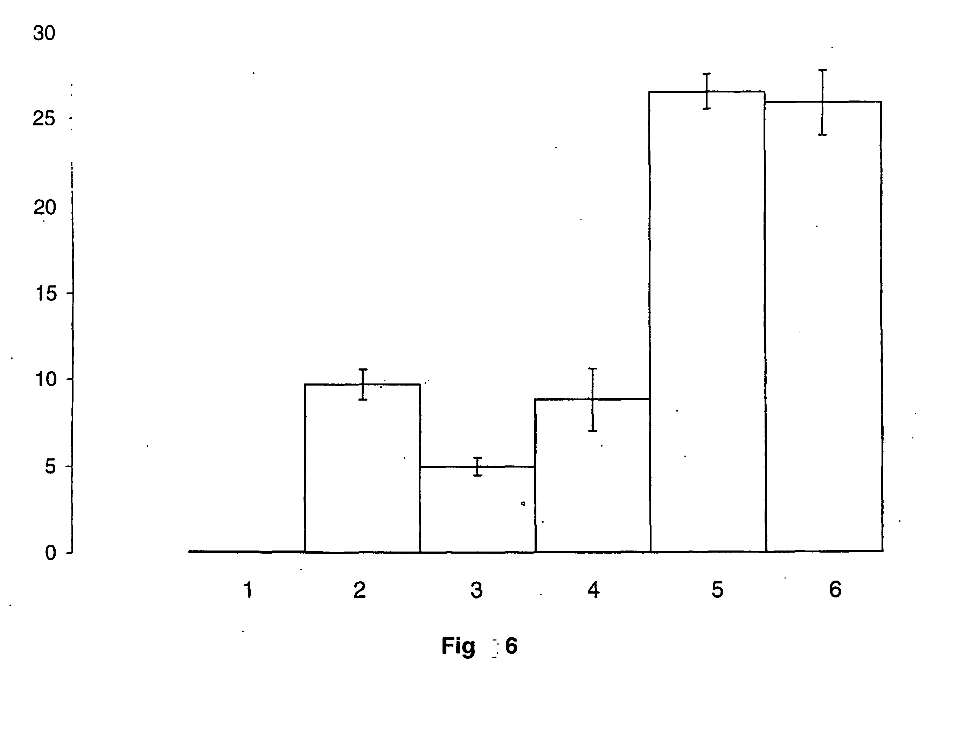

Die Ergebnisse für GO sind in Figur 6 dargestellt. Balken 2 von Figur 6 zeigt die GO-Konzentration in relativen Einheiten (rE), die nach 4 Stunden Kontaktzeit zwischen der modifizierten Polymermembran und dem HD-Plasma gemessen wurde. Im Vergleich zur GO-Konzentrationen, die im HD-Plasma ohne die modifizierte Polymermembran gemessen wurde (Balken 6 von Figur 6), beträgt die GO-Konzentration nur ca. 37 %. Die Balken 3, 4 und 5 von Figur 6 zeigen die GO-Konzentrationen, die nach 4 Stunden Kontaktzeit mit HD-Plasma erhalten wurden, das 20, 5 und 1 µmol Aminoguanidin-Hydrochlorid pro ml HD-Plasma enthielt. Balken 1 von Figur 6 zeigt die GO-Konzentration in HD-Plasma, das zuvor 3 mal 8 h gegen Celluloseregenerat mit einer Ausschlussgrenze von 3500 Dalton dialysiert wurde. Durch die Dialyse wurde das kleine GO-Molekül vollständig entfernt.

## Patentansprüche

1. Modifizierter polymerer Formkörper herstellbar durch Umsetzung von Diaminoguanidin und/oder Triaminoguanidin mit einem polymeren Ausgangsformkörper, welcher Reste R-X trägt, wobei R eine gegebenenfalls durch eine Hydroxylgruppe substituierte Alkylengruppe mit 1 bis 3 Kohlenstoffatomen und X eine Gruppe ist, die während der Umsetzung durch Diaminoguanidin und/oder Triaminoguanidin substituiert wird oder mit einem polymeren Ausgangsformkörper, welcher Reste Y trägt, an die während der Umsetzung Diaminoguanidin und/oder Triaminoguanidin addiert werden.

2. Modifizierter polymerer Formkörper nach Anspruch 1, **dadurch gekennzeichnet, dass** die Reste R-X die Halomethylgruppen -CH₂Cl, -CH₂Br, -CH₂I oder -CH₂-CH(OH)-CH₂Cl sind.

3. Modifizierter polymerer Formkörper nach Anspruch 1, **dadurch gekennzeichnet, dass** die Reste Y Epoxide der Formel 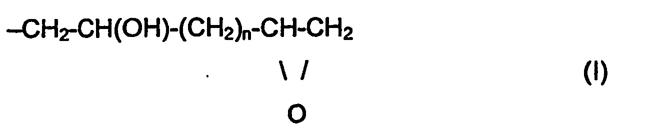 mit n = 1 bis 10 oder Epoxide der Formel 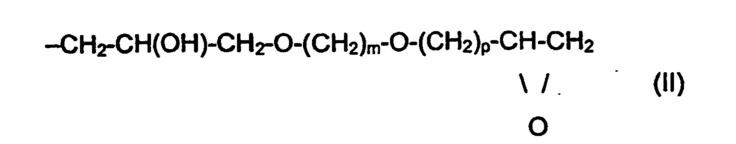 mit m = 1 bis 4 und p.= 1 bis 3 sind.

4. Modifizierter polymerer Formkörper nach einem der Ansprüche 1 bis 3, **dadurch gekennzeichnet, dass** er eine Polymermembran ist.

5. Modifizierter polymerer Formkörper nach einem der Ansprüche 1 bis 4, **dadurch gekennzeichnet, dass** der polymere Ausgangsformkörper aus einem synthetischen Polymer besteht.

6. Modifizierter polymerer Formkörper nach Anspruch 5, **dadurch gekennzeichnet, dass** das synthetische Polymer ein Polyamid ist.

7. Modifizierter polymerer Formkörper nach Anspruch 6, **dadurch gekennzeichnet, dass** der polymere Ausgangsformkörper ein Polyamid ist und an die Aminoendgruppen 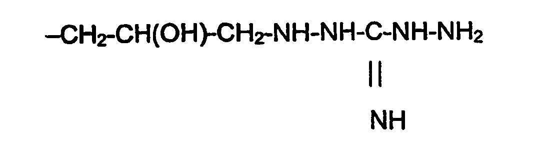 gebunden ist.

8. Modifizierter polymerer Formkörper nach Anspruch 5, **dadurch gekennzeichnet, dass** der polymere Ausgangsformkörper ein Polyethersulfon ist.

9. Modifizierter polymerer Formkörper nach Anspruch 8, **dadurch gekennzeichnet, dass** an einer oder mehreren der Positionen 3, 3', 5 und 5' des Polyethersulfons 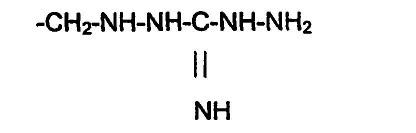 gebunden ist.

10. Verfahren zur Herstellung eines modifizierten polymeren Formkörpers umfassend die Schritte
a) Einführen von Resten R-X, wobei R eine gegebenenfalls durch eine Hydroxylgruppe substituierte Alkylengruppe mit 1 bis 3 Kohlenstoffatomen und X ein Halogenatom ist, in ein Polymer und Herstellen eines polymeren Ausgangsformkörpers aus dem die Reste R-X enthaltenden Polymer oder Einführen der Reste R-X mit der vorstehend genannten Bedeutung in einen polymeren Ausgangsformkörper oder Einführen eines Restes Y, an den Diaminoguanidin und/oder Triaminoguanidin addiert werden kann, in einen polymeren Ausgangsformkörper und
b) Umsetzen des die Reste R-X oder den Rest Y enthaltenden polymeren Ausgangsformkörpers mit Diaminoguanidin und/oder Triaminoguanidin, um so den modifizierten polymeren Formkörper zu erhalten.

11. Verfahren nach Anspruch 10, **dadurch gekennzeichnet, dass** der Rest Y ein Epoxid der Formel 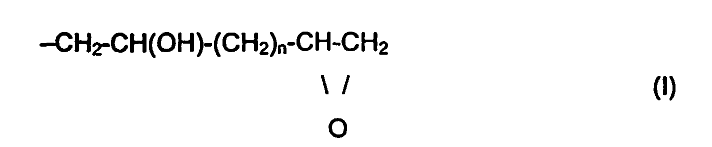 mit n = 1 bis 10 oder ein Epoxid der Formel 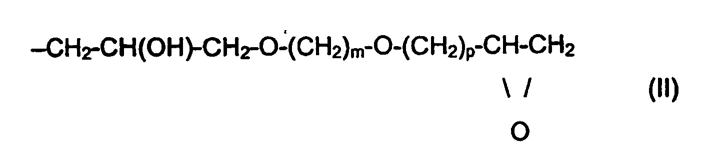 mit m =1 bis 4 und p = 1 bis 3 ist.

12. Verfahren nach Anspruch 10 oder 11, **dadurch gekennzeichnet, dass** als polymerer Ausgangsformkörper eine semipermeable Polymermembran mit poröser Struktur hergestellt bzw. eingesetzt wird.

13. Verfahren nach Anspruch 10 oder 11, **dadurch gekennzeichnet, dass** in Schritt a) als Polymer ein synthetisches Polymer bzw. als polymerer Ausgangsformkörper ein Ausgangsformkörper aus einem synthetischen Polymeren eingesetzt wird.

14. Verfahren nach Anspruch 13, **dadurch gekennzeichnet, dass** in Schritt a) das synthetische Polymer ein Polyethersulfon ist.

15. Verfahren nach Anspruch 14, **dadurch gekennzeichnet, dass** in Schritt a) das Polyethersulfon chlor-, brom- oder iodmethyliert und daraus ein chlor-, brom-oder iodmethylierter Polyethersulfon-Ausgangsformkörper hergestellt wird, der in Schritt b) mit Diaminoguanidin umgesetzt wird.

16. Verfahren nach Anspruch 13, **dadurch gekennzeichnet, dass** das synthetische Polymer ein Polyamid ist.

17. Verfahren nach Anspruch 16, **dadurch gekennzeichnet, dass** in Schritt a) ein Ausgangsformkörper aus Polyamid eingesetzt und mit Epichlorhydrin umgesetzt wird und nachfolgend in Schritt b) mit Diaminoguanidin umgesetzt wird.

18. Verfahren nach einem der Ansprüche 10 bis 17, **dadurch gekennzeichnet, dass** die Umsetzung in Schritt b) in einer wässrigen alkalischen Lösung stattfindet.

19. Verfahren nach einem der Ansprüche 10 bis 18, **dadurch gekennzeichnet, dass** die Umsetzung in Schritt b) in einem Temperaturbereich von Raumtemperatur bis etwa 80 °C stattfindet.

20. Verwendung des modifizierten polymeren Formkörpers nach einem oder mehreren der Ansprüche 1 bis 19 zur Entfernung von reaktiven Carbonylverbindungen aus Blut, Plasma oder PBS-Puffer.

21. Verwendung nach Anspruch 20 **dadurch gekennzeichnet, dass** die reaktiven Carbonylverbindungen Dicarbonylverbindungen sind.

22. Verwendung nach Anspruch 21, **dadurch gekennzeichnet, dass** die Dicarbonylverbindungen Glyoxal, Methylglyoxal, 3-Deoxyglycoson, Malondialdehyd, Glycoldialdehyd und 2-Hydroxypropanal sind, die einzeln oder im Gemisch vorliegen.

23. Verwendung nach einem oder mehreren der Ansprüche 20 bis 22, **dadurch gekennzeichnet, dass** der modifizierte polymere Formkörper eine modifizierte polymere Membran ist.

## Claims

1. A modified polymeric shaped body that can be produced by reacting diaminoguanidine and/or triaminoguanidine with a starting polymeric shaped body carrying R-X residues, where R is an alkylene group that may or may not be substituted with a hydroxyl group and contains from 1 to 3 carbon atoms, and X is a group that is substituted during the reaction by diaminoguanidine and/or triaminoguanidine, or with a starting polymeric shaped body carrying residues Y, on to which diaminoguanidine and/or triaminoguanidine are added during the reaction.

2. Modified polymeric shaped body according to Claim 1, **characterised in that** the R-X residues are the halomethyl groups -CH₂Cl, -CH₂Br, -CH₂I or -CH₂-CH (OH)-CH₂Cl.

3. Modified polymeric shaped body according to Claim 1, **characterised in that** the residues Y are epoxides of formula 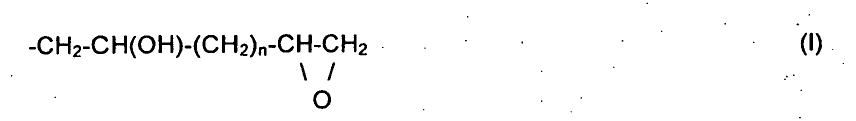 where n = 1 to 10, or epoxides of formula 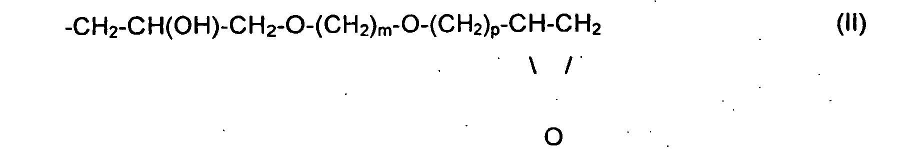 where m = 1 to 4 and p = 1 to 3.

4. Modified polymeric shaped body according to one of Claims 1 to 3, **characterised in that** it is a polymer membrane.

5. Modified polymeric shaped body according to one of Claims 1 to 4, **characterised in that** the starting polymeric shaped body consists of a synthetic polymer.

6. Modified polymeric shaped body according to Claim 5, **characterised in that** the synthetic polymer is a polyamide.

7. Modified polymeric shaped body according to Claim 6, **characterised in that** the starting polymeric shaped body is a polyamide having amino endgroups to which 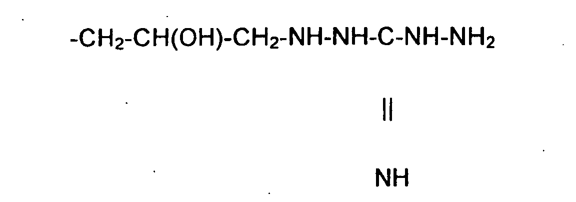 is bound.

8. Modified polymeric shaped body according to Claim 5, **characterised in that** the starting polymeric shaped body is a polyethersulfone.

9. Modified polymeric shaped body according to Claim 8, **characterised in that** 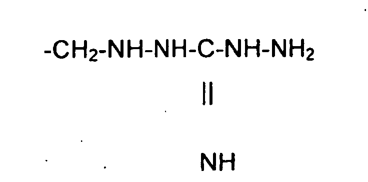 is bound at one or more of the 3, 3', 5 and 5' positions of the polyethersulfone.

10. Method for producing a modified polymeric shaped body comprising the steps
a) introduction into a polymer of R-X residues, where R is an alkylene group that may or may not be substituted with a hydroxyl group and contains from 1 to 3 carbon atoms and X is a halogen atom, and production of a starting polymeric shaped body from the polymer containing the R-X residues, or introduction of R-X residues, where R-X has the same meaning as above, into a starting polymeric shaped body or introduction of a residue Y, to which diaminoguanidine and/or triaminoguanidine can be added, into a starting polymeric shaped body and
b) reaction of the starting polymeric shaped body containing the R-X residues or the residue Y with diaminoguanidine and/or triaminoguanidine to obtain the modified polymeric shaped body.

11. Method according to Claim 10, **characterised in that** the residue Y is an epoxide of formula 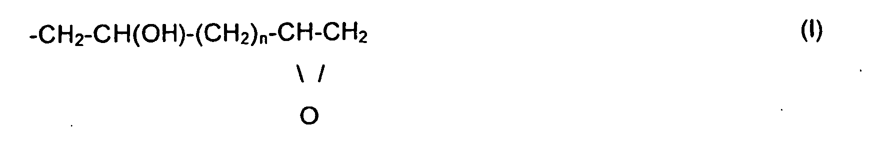 where n = 1 to 10, or an epoxide of formula 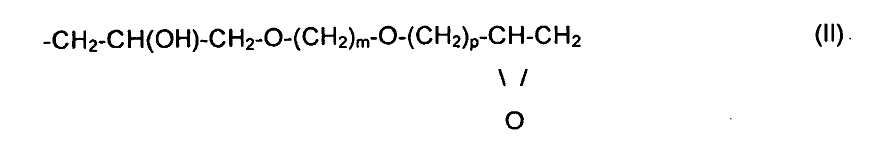 where m =1 to 4 and p = 1 to 3.

12. Method according to Claim 10 or 11, **characterised in that** a semipermeable polymer membrane of porous structure is produced or used as the starting polymeric shaped body.

13. Method according to Claim 10 or 11, **characterised in that** in step a) a synthetic polymer is used as the polymer, or a shaped starting body made from a synthetic polymer as the starting polymeric shaped body .

14. Method according to Claim 13, **characterised in that** in step a) the synthetic polymer is a polyethersulfone.

15. Method according to Claim 14, **characterised in that** in step a) the polyethersulfone is chloromethylated, bromomethylated or iodomethylated and a chloromethylated, bromomethylated or iodomethylated polyethersulfone shaped starting body is produced therefrom, which is reacted in step b) with diaminoguanidine.

16. Method according to Claim 13, **characterised in that** the synthetic polymer is a polyamide.

17. Method according to Claim 16, **characterised in that** in step a) a polyamide shaped starting body is used and is reacted with epichlorohydrin and subsequently, in step b), with diaminoguanidine.

18. Method according to one of Claims 10 to 17, **characterised in that** the reaction in step b) takes place in an alkaline aqueous solution.

19. Method according to one of Claims 10 to 18, **characterised in that** the reaction in step b) takes place in a temperature range from room temperature to approx. 80°C.

20. Use of the modified polymeric shaped body according to one or more of Claims 1 to 19 for removal of reactive carbonyl compounds from blood, plasma or PBS buffer.

21. Use according to Claim 20, **characterised in that** the reactive carbonyl compounds are dicarbonyl compounds.

22. Use according to Claim 21, **characterised in that** the dicarbonyl compounds are glyoxal, methylglyoxal, 3-deoxyglucosone, malonic dialdehyde, glycol dialdehyde and 2-hydroxypropanal, which may occur singly or as a mixture.

23. Use according to one or more of Claims 20 to 22, **characterised in that** the modified polymeric shaped body is a modified polymeric membrane.

## Revendications

1. Corps façonné en polymère modifié, qu'on peut fabriquer en faisant réagir de la diaminoguanidine et/ou de la triaminoguanidine, soit avec un corps façonné en polymère de départ qui porte des résidus de formule R-X, dans laquelle R représente un groupe alkylène comportant 1 à 3 atomes de carbone et portant éventuellement un substituant hydroxyle et X représente un groupe qui est remplacé par substitution par la diaminoguanidine et/ou la triaminoguanidine au cours de la réaction, soit avec un corps façonné en polymère de départ qui porte des résidus de type Y sur lesquels la diaminoguanidine et/ou la triaminoguanidine s'additionnent au cours de la réaction.

2. Corps façonné en polymère modifié, conforme à la revendication 1, **caractérisé en ce que** les résidus de formule R-X sont des groupes halo-génométhyle -CH₂Cl, -CH₂Br ou -CH₂I, ou des groupes de formule -CH₂-CH(OH)-CH₂Cl.

3. Corps façonné en polymère modifié, conforme à la revendication 1, **caractérisé en ce que** les résidus de type Y sont des groupes époxyde de formule 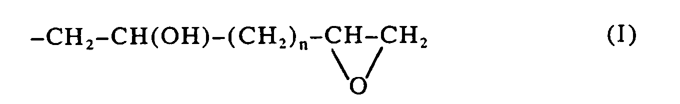 dans laquelle n vaut de 1 à 10,
ou des groupes époxyde de formule 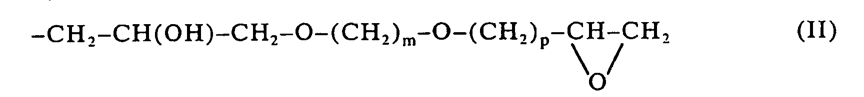 dans laquelle m vaut de 1 à 4 et p vaut de 1 à 3.

4. Corps façonné en polymère modifié, conforme à l'une des revendications 1 à 3, **caractérisé en ce qu'**il s'agit d'une membrane en polymère.

5. Corps façonné en polymère modifié, conforme à l'une des revendications 1 à 4, **caractérisé en ce que** le corps façonné en polymère de départ est fait d'un polymère synthétique.

6. Corps façonné en polymère modifié, conforme à la revendication 5, **caractérisé en ce que** le polymère synthétique est un polyamide.

7. Corps façonné en polymère modifié, conforme à la revendication 6, **caractérisé en ce que** le corps façonné en polymère de départ est fait d'un polyamide et **en ce qu'**y sont liés des groupes terminaux aminés de formule

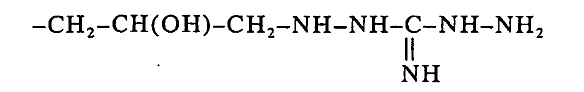

8. Corps façonné en polymère modifié, conforme à la revendication 5, **caractérisé en ce que** le corps façonné en polymère de départ est fait d'un polyéthersulfone.

9. Corps façonné en polymère modifié, conforme à la revendication 8, **caractérisé en ce que** des groupes de formule 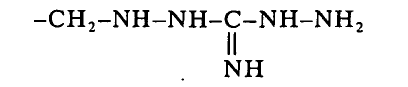 sont liés en une ou plusieurs des positions 3, 3', 5 et 5' du polyéthersulfone.

10. Procédé de fabrication d'un corps façonné en polymère modifié, lequel procédé comporte les étapes suivantes :
a) introduire dans un polymère des résidus de formule R-X, dans laquelle R représente un groupe alkylène comportant 1 à 3 atomes de carbone et portant éventuellement un substituant hydroxyle et X représente un atome d'halogène, et fabriquer, à partir de ce polymère contenant des résidus de formule R-X, un corps façonné en polymère de départ, ou bien introduire des résidus de formule R-X, où les symboles ont les significations indiquées ci-dessus, dans un corps façonné en polymère de départ, ou encore introduire, dans un corps façonné en polymère de départ, des résidus de type Y sur lesquels la diaminoguanidine et/ou la triaminoguanidine peuvent s'additionner,
b) faire réagir le corps façonné en polymère de départ, qui porte des résidus de formule R-X ou de type Y, avec de la diaminoguanidine et/ou de la triaminoguanidine, pour obtenir un corps façonné en polymère modifié.

11. Procédé conforme à la revendication 10, **caractérisé en ce que** les résidus de type Y sont des groupes époxyde de formule 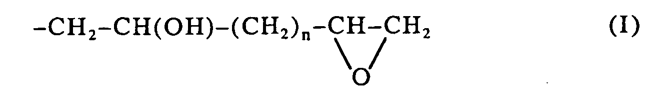 dans laquelle n vaut de 1 à 10,
ou des groupes époxyde de formule 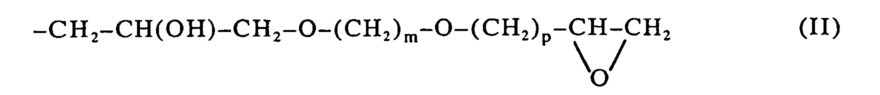 dans laquelle m vaut de 1 à 4 et p vaut de 1 à 3.

12. Procédé conforme à la revendication 10 ou 11, **caractérisé en ce que** l'on fabrique ou l'on utilise, en tant que corps façonné en polymère de départ, une membrane en polymère, semi-perméable et dotée d'une structure poreuse.

13. Procédé conforme à la revendication 10 ou 11, **caractérisé en ce que**, dans l'étape (a), on emploie en tant que polymère un polymère synthétique, ou bien, en tant que corps façonné en polymère de départ, un corps façonné de départ fait d'un polymère synthétique.

14. Procédé conforme à la revendication 13, **caractérisé en ce que**, dans l'étape (a), le polymère synthétique est un polyéthersulfone.

15. Procédé conforme à la revendication 14, **caractérisé en ce que**, dans l'étape (a), on fait subir au polyéthersulfone une chlorométhylation, une bromométhylation ou une iodométhylation et l'on en fait un corps façonné de départ en polyéthersulfone chlorométhylé, bromométhylé ou iodométhylé, qu'on fait réagir dans l'étape (b) avec de la diaminoguanidine.

16. Procédé conforme à la revendication 13, **caractérisé en ce que** le polymère synthétique est un polyamide.

17. Procédé conforme à la revendication 16, **caractérisé en ce que**, dans l'étape (a), on utilise un corps façonné de départ fait d'un polyamide, qu'on fait réagir avec de l'épichlorhydrine, et qu'on fait ensuite réagir dans l'étape (b) avec de la diaminoguanidine.

18. Procédé conforme à l'une des revendications 10 à 17, **caractérisé en ce que**, dans l'étape (b), la réaction est effectuée en solution aqueuse alcaline.

19. Procédé conforme à l'une des revendications 10 à 18, **caractérisé en ce que**, dans l'étape (b), la réaction est effectuée à une température située dans le domaine allant de la température ambiante à 80 °C environ.

20. Utilisation d'un corps façonné en polymère modifié conforme à l'une des revendications 1 à 19, en vue de séparer des composés carbonylés réactifs d'avec du sang, du plasma ou de la solution tampon PBS (solution salée tamponnée au phosphate).

21. Utilisation conforme à la revendication 20, **caractérisée en ce que** les composés carbonylés réactifs sont des composés dicarbonylés.

22. Utilisation conforme à la revendication 21, **caractérisée en ce que** les composés dicarbonylés sont du glyoxal, du méthyl-glyoxal, du 3-désoxy-glycoson, du malonodialdéhyde, du glycoldialdéhyde ou du 2-hydroxy-propanal, qui se présentent seuls ou mélangés.

23. Utilisation conforme à l'une des revendications 20 à 22, **caractérisée en ce que** le corps façonné en polymère modifié est une membrane en polymère modifiée.
